# EUROPEAN PATENT SPECIFICATION

(11) **EP 3 088 338 B1**
(45) Date of publication and mention of the grant of the patent: **21.03.2018**
(21) Application number: 15185871.9
(22) Date of filing: 18.09.2015
(51) Int. Cl.: B65H 16/00, B05B 15/04

(54) **PROTECTIVE STRIP FOR BODYWORK**
SCHUTZLEISTE FÜR KAROSSERIE
BANDE DE PROTECTION DE CARROSSERIE

(30) Priority: 29.04.2015 ES 201530486 U
(43) Date of publication of application: 02.11.2016
(73) Proprietor: Bossauto Innova, S.A., 08430 La Roca del Valles (ES)
(72) Inventor: TARTER GARRO, Manuel, 08430 La Roca del Valles (ES)
(74) Representative: Oficina Ponti, SLP

(56) References cited:
- EP-A1- 1 539 369
- EP-A1- 1 972 425
- DE-U- 1 878 884
- FR-A1- 2 042 417

## Description

### Object of the Invention.

More specifically, this invention refers to a strip to protect certain parts of the bodywork, used in the automobile body workshops after the affected parts have been repaired and later, when they are painted.

This strip is supplied in reels formed by several strips joined together longitudinally and rolled up, so that the base of strip with adhesive rests on the base of the strip without adhesive.

### State of the Art

The state of the art on the market are a variety of protective strips for dent repairs and similar work on automobiles, which are normally supplied as several strips joined longitudinally by their lateral bases, forming circular reels, having provided that a certain part of the base of the strip has a thin layer of adhesive enabling it to be rolled up and keep stable, the rolling of these strips constituting the reel.

The common problem of these reels and strips, is that the adhesive placed on a part of the base of the body of the strip or longitudinal base of the same, due to the nature of the adhesive, retains the strip too firmly on the reel and when the end is pulled it tears off material from the body of strip wasting part of it as well as causing a loss of adherence by contamination of traces of foam on the adhesive. Document EP 1 972 425 presents a reel formed by strips of protective strip for bodywork with an adhesive strip applied to the side of the strip body.

### Scope of the Invention.

To compensate the sticking action of the adhesive with a new design of the strip, and more specifically of the transversal section of the same, so that when it is rolled up, the sticking action of the adhesive is minimised, this is achieved by having a longitudinal groove on the surface of the strips, which is made by adequate means, modifying its surface.

Manufacturing with a single longitudinal groove reduces the surface in contact with the adhesive and the sticking action is minimised and so the material is no longer torn off when pulling a strip from the reel and no particles are torn off the strip due to the excessive sticking action of the adhesive contaminating the foam base of the strip, which is then used on certain parts of the bodywork, onto which the strip is applied once cut and separated from the reel, substantially improving adhesion, as the adhesive no longer has no traces of foam torn off the foam strip, especially in the area or section of the roll that receives the greatest pressure.

### Description of the Invention.

The proposed invention refers to a protective strip, the body of which has a single longitudinal groove, which is obtained by adequate means. The aim of this single groove is to reduce the surface area of the body of the strip, with a base of the protective strip surrounding it with adhesive, and thus reducing the sticking action of the strip when one end is pulled and cut for use on the automobile bodywork.

In the current state of the art, the body of the protective strip and the surface of the corresponding base is impregnated with an adhesive, which enables a strip formed by several protective strips to be rolled up forming a reel, which, in one of the possible embodiments, is placed in a box with an orifice through which it is pulled out.

The impregnation of part of the surface of the body of the protective strip, which we call base of the protective strip, is directly opposite the single longitudinal groove in the protective strip, and the protective strip is rolled up into a reel and the pressure exerted when making the reel makes part of the surface stick excessively, so that when the end of the strip is pulled, some of the material is detached at the area of contact between the strips, thus reducing the useable length of the reel.

Creating a single longitudinal groove in the strips substantially reduces the contact area of the base between strips and therefore corrects the undesired excessive adhesion between strips. The groove can be of any shape, with the sole limitation that the upper part is wider than the bottom of the groove, the adhesive being placed close to the upper edges of the single groove, so that on the upper surface there is no material or adhesive in contact, and thus the adhesive action is much reduced, but still sufficient to roll up the protective strip and form a consistent reel.

Other details and characteristics will be described in the description below, referring to the drawings that accompany it, displaying a practical (although not exclusive) realisation of the invention can be seen for illustrative purposes, in any adequate material and dimensions.

### Description of the drawings.

Below is a list of the different parts of the invention, which are indicated in the following drawings; (10) protective strip, (11) body of (10), (12) groove, (13) adhesive layer, (14) multi-strip, (15) contact area, (16) reel, (17) groove edges (12).
Figure 1 is a cross-section front elevation view of a reel (16), in which different superimposed layers of the protective strip (10) can be seen, stuck together with the adhesive layer (13).
Figure 2 is a perspective view of a protective strip (10), the surface of which has a longitudinal groove (12) opposite the base surface (12) with adhesive (13).
Figure 3 is a side elevation view of a protective strip (10) reel (16).
Figure 4 is a detail through "1" of Figure 1, which shows the contact areas (15) of the body (11) of the strip (10) with another below it, the former with a groove (12) and between both areas is an adhesive layer (13).

### Description of an embodiment of the invention.

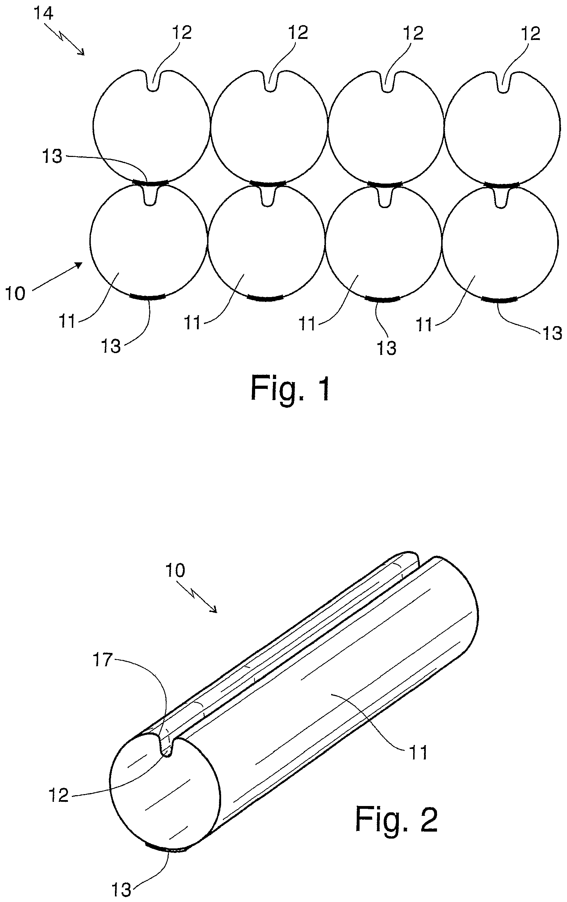

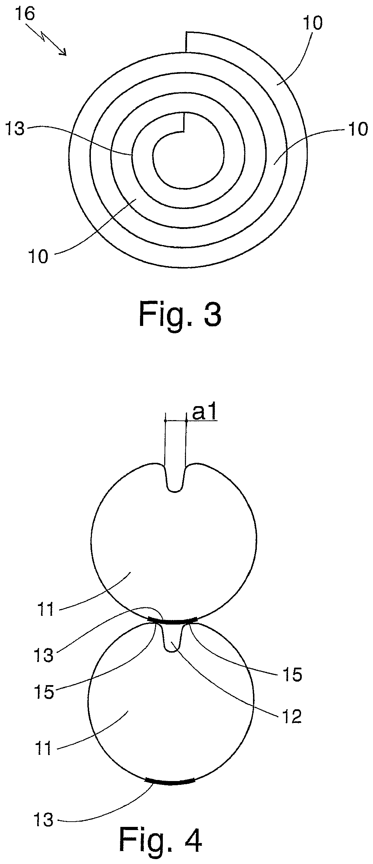

In one of the preferred embodiments of the invention, as can be seen in Figure 3, a reel (16) is the result of rolling one or more strips of protective strip (10) laterally joined in longitudinal direction and spiral fashion, forming a strip comprising one or more strips (10), as can be seen in Figure 1, joined at their side edges of the body (11), the body (11) of which has a single longitudinal groove (12) on its surface, as can be seen in Figure 2.

In Figure 2 it can also bee seen that close to the upper edges (17) of the single groove (12) in the protective strip (10) there are same adhesive layers (13) so that, as can be seen in the detail of Figure 4, the lower part of body (11) of the strip (10) will stick to the strip (10) below it, when coming into contact with the edges (17) of said groove (12), with the exception of width "a1" of (12).

This single longitudinal groove (12) is shaped by adequate means, thus avoiding waste produced by other methods such as cutting out the material with a cutter o similar devices, forming a single groove (12) of width "a1" at its open upper part.

Width "a1" (see Figure 4) is decisive to reduce the adhesive force on the surface (12) of body base (11) of the protective strip (10), and in this manner the properties of the adhesive are maintained and the desired performance is achieved, so that when pulling an end of the strip (10) to be cut to the desired length, it will detach easily, without tearing off material from the body (11) of (10).

Having sufficiently described this invention using the figures attached, it is easy to understand that any modification may be made to the detail which may be deemed to be appropriate, whenever these changes do not alter the essence of the invention summarised in the following claims.

## Claims

1. A reel formed by one or more strips of protective strip for bodywork, the strip joined laterally and coated on their base surface with adhesive material, dispensing the material by pulling one end of the strip or strips, detaching the material, **characterised in that** the protective strip (10) of the body (11) has a single longitudinal groove (12), wherein said single longitudinal groove is directly opposite an impregnated base of the protective strip.

2. A reel according to the claim 1 **characterised in that** the width of the single groove (12) is greater than the width of the bottom of the groove, retaining the strips (10) and their bodies (11) by the edges (17) of the groove (12), the protective strip or strips (10) forming a reel (16) adhered by their lateral bases.

3. A reel according to the preceding claims **characterised in that** the perimeter shape of the single groove (12) can be any one.

## Patentansprüche

1. Eine Rolle, die durch einen oder mehrere Streifen von Schutzstreifen für Karosserien gebildet ist, wobei die Streifen lateral verbunden sind und an der Basisoberfläche derselben mit Haftmaterial beschichtet sind, wobei das Material durch Ziehen eines Endes des Streifens oder der Streifen abgegeben wird, wobei das Material abgetrennt wird, **dadurch gekennzeichnet, dass** der Schutzstreifen (10) des Körpers (11) eine einzelne Längsrille (12) aufweist, wobei sich die einzelne Längsrille direkt gegenüber einer imprägnierten Basis des Schutzstreifens befindet.

2. Eine Rolle gemäß Anspruch 1, die **dadurch gekennzeichnet ist, dass** die Breite der einzelnen Rille (12) größer ist als die Breite der unteren Seite der Rille, wobei die Streifen (10) und ihre Körper (11) durch die Ränder (17) der Rille (12) zurückgehalten werden, wobei der oder die Schutzstreifen (10) eine Rolle (16) bilden, die durch die lateralen Basen derselben anhaftet.

3. Ein Rolle gemäß den vorhergehenden Ansprüchen, die **dadurch gekennzeichnet ist, dass** die Umfangsform der einzelnen Rille (12) eine beliebige sein kann.

## Revendications

1. Bobine formée par une ou plusieurs bandes de bande protectrice de carrosserie, la bande étant jointe latéralement et recouverte sur la surface de sa base par du matériau adhésif, qui distribue le matériau en tirant sur une extrémité de la bande ou des bandes, et qui détache le matériau, **caractérisé en ce que** la bande protectrice (10) du corps (11) comporte une rainure longitudinale unique (12), dans laquelle ladite rainure longitudinale unique est située directement en face d'une base imprégnée de la bande protectrice.

2. Bobine selon la revendication 1 **caractérisée en ce que** la largeur de la rainure unique (12) est plus grande que la largeur du bas de la rainure, retenant les bandes (10) et leurs corps (11) par les bords (17) de la rainure (12), la ou les bande(s) protectrices (10) formant une bobine (16) collée par leurs bases latérales.

3. Bobine selon les revendications précédentes **caractérisée en ce que** la forme du périmètre de la rainure unique (12) peut être n'importe laquelle.
